**Europäisches Patentamt**

**European Patent Office**

**Office européen des brevets**

(11) Publication number: **0 064 871**

**A2**

(12) # EUROPEAN PATENT APPLICATION

(21) Application number: **82302341.1**

(22) Date of filing: **07.05.82**

(51) Int. Cl.³: **A 61 C 1/07**

(30) Priority: **08.05.81 JP 70007/81**

(43) Date of publication of application:
**17.11.82 Bulletin 82/46**

(84) Designated Contracting States:
**AT BE CH DE FR GB LI**

(71) Applicant: **NAKANISHI DENTAL MFG. CO. LTD.**
**340 Kamihinata**
**Kanuma City Tochigi(JP)**

(72) Inventor: **Nakanishi, Toshimasa**
**340 Kamihinata**
**Kanuma Tochigi Prefecture(JP)**

(74) Representative: **Leale, Robin George et al,**
**FRANK B. DEHN & CO. Imperial House 15-19 Kingsway**
**London WC2B 6UZ(GB)**

(54) **Dental handpieces.**

(57) A dental handpiece in which a tool holder (30) is driven in oscillatory fashion by a drive shaft (20) at right angles to the holder, via a drive pin (26) engaging in an axial slot (40) in the holder, the slot being formed in a convex surface of the holder so as to maintain the penetration of the drive pin in the slot at the extremes of its travel.

FIG. 1

Croydon Printing Company Ltd.

EP 0 064 871 A2

- 1 -

"Dental handpieces"

This invention relates to dental handpieces, particularly but not exclusively for operating on and enlarging root canals, for the purpose of which procedures it is desired to drive a dental tool in oscillatory partial rotation about its axis.

Dental handpieces for this purpose are known, for example from Japanese Patent Application Publication No. 13640/1970 and Japanese Utility Model Publication No. 386/1977, comprising a handle incorporating a drive shaft, a head incorporating a tool holder mounted for rotation about an axis perpendicular to the axis of the drive shaft, and a drive pin extending from the drive shaft, at a location laterally offset from the shaft axis, into an axially extending slot in the tool holder so as to drive the latter in oscillatory partial rotation upon rotation of the drive shaft.

These known handpieces suffer from the disadvantage that the drive pin tends to disengage from the slot in the tool holder when at the extremes of its travel, i.e. when near the middle of the length of the slot, which limits the designed oscillating angle to a maximum of about 70°. Furthermore, the drive transmission tends to be rough at those same extremes, leading to rapid wear of both the drive pin and the tool holder, and consequent backlash.

According to the present invention there is provided a dental handpiece as described above, characterised in that the face of the tool holder in which the said slot is defined is convex in the direction of the length of the slot.

With such an arrangement the drive pin extends further into the slot at the aforementioned extremes of its travel as compared with the aforementioned prior art and is therefore less likely to become disengaged, with the result that the angle of oscillation can be increased. Furthermore, smoother running is achieved. A maximum improvement is obtained if, as in a preferred form of the invention, the convexity of the said slot is such that the said drive pin extends into the slot to substantially the same extent at all positions of rotation of the drive shaft.

Preferably the said face of the tool holder in which the said slot is defined is part-spherical with its geometric centre on the axis of the tool holder at the point where that axis and the axis of the drive shaft intersect.

Preferably the said drive pin is located adjacent the perimeter of a circular end face of the drive shaft, said end face being of concave part-spherical shape concentric with, and closely adjacent, the said part-spherical face of the tool holder.

Preferably the said drive pin is circular cylindrical and has its axis passing through the intersection of the drive shaft and tool holder axes.

An embodiment of the invention will now be described by way of example and with reference to the accompanying drawings, in which:-

FIGURE 1 is an axial cross-sectional view of the relevant parts of a dental handpiece according to the invention;

FIGURE 2 is a partial cross-sectional view, on an enlarged scale, taken along a line II-II of Figure 1 particularly showing the drive shaft coupled with the tool holder; and

FIGURE 3 is an enlarged partial perspective view of such coupling.

Referring to the drawings, a dental handpiece 10 includes a handle 12 and a head 14 which is integrally and perpendicularly linked to the handle.

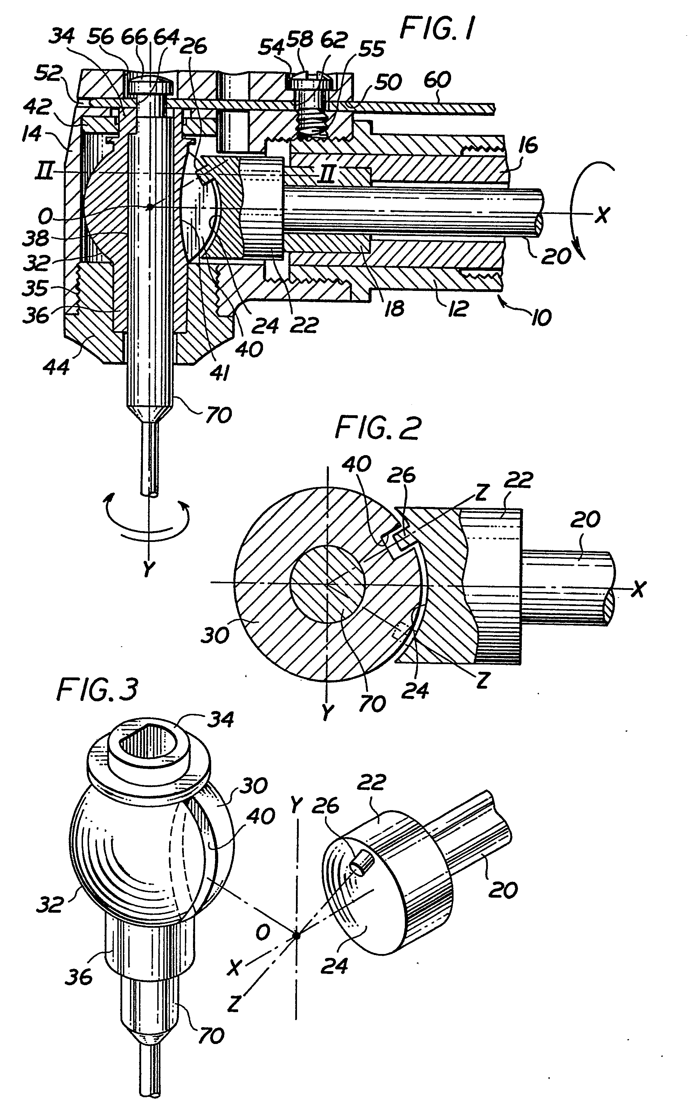

Fixed in the handle 12 is a sleeve 16 in which a rotatable drive shaft 20 having an integral end piece 22 is journaled for rotation by means of a bushing 18. As particularly shown in Figures 1 and 2, a front face 24 of the end piece 22 is spherically concave and concentric with a spherically convex middle portion of a driven tool holder 30. A cylindrical drive pin 26 is located at the periphery of the concave face 24 and has its axis directed at the point of intersection 0 of the axis X of the drive shaft 20 and the axis Y of the driven tool holder 30.

Perpendicularly to the axis of the drive shaft 20, and inside the head 14, is rotatably mounted the cylindrical tool holder 30 having a spherical middle portion 32 concentric with the concave face 24 of the drive shaft 20. An upper end cylindrical portion 34 and a lower end cylindrical portion 36 of the tool holder are inserted into the head 14 and a bushing cap 44 respectively, to mount it for rotation.

An axial tool-receiving opening 38 extends through the holder 30, and a slot 40 extends axially along the spherical surface of the middle portion 32 to receive the drive pin 26 and thereby drivingly connect the drive shaft 20 to the holder 30.

The floor 41 of the slot 40 is concave so that the end of the pin 26 will not contact the floor of the slot.

The holder 30 is received in the head 14 at its upper end 34 by a bushing 42 and at its lower end 36 by a bushing cap 44. The bushing cap 44 is mounted via an internal screw thread 35 of the head 14, at the same time slidably inserting the drive pin 26 in the slot 40.

In operation the drive pin 26 slides reciprocally in the slot 40 when the drive shaft rotates thus causing oscillation of a dental tool 70.

Slots 50 and 52 are formed in the top portion of the handle 12, parallel to the drive shaft 20, and a pair of bores 54 and 56 vertically cross the slots 50 and 52 respectively, the bore 56 being coaxial with the central tool-receiving bore 38 in the tool holder 30. A screw-thread 55 is formed in the lower part of the bore 54.

A locking plate 60 having a pair of openings 62 and 64 to coincide with the bores 54 and 56 respectively is slidably inserted in the slots 50 and 52. A screw 58 engages in the opening 62 and the threaded bore 54 to fix the locking plate 60 in position.

Received in the bore 38 is a dental tool 70, which is secured by a screw 66 received in the bore 56, an opening 64 and a grooved opening (not shown) formed at a top portion of the dental tool, so that the latter is held at right angles to the axis X of the drive shaft 20. Accordingly, the dental tool 70 is prevented from slipping out of the holder 30.

As shown in the drawings, the axis Z of the drive pin 26 passes through the point of intersection of the axis Y of the drive shaft 20 and the axis X of the tool holder 30, the point of intersection being also the centre of the spherical surface of the holder 30.

In operation the pin 26 is driven to move horizontally relative to the concave slot 40 whilst always being directed at the point of intersection 0 of the axes X and Y, so that the distance between the tip of the drive pin 26 and the point of intersection 0 is kept constant, thus preventing any possible disengagement of the pin 26 at its two extreme positions in the guide slot 40. In addition, through smooth and continuous surface contact of the pin 26 with the side faces of the slot 40, transmission of the driving power is carried out easily and securely and abrasion of the sliding members and parts is small.

It will thus be seen that at least in its preferred embodiments the invention provides a dental handpiece, particularly suitable for the treatment of root canals, which permits a wide angle of oscillation and smooth operation of the dental tool, which is comparatively simple in construction and at the same time rigid, strong and durable, and furthermore which increases tactile feedback to the dentist's fingers when in use.

CLAIMS:

1.    A dental handpiece for mounting a dental tool
and driving the same in oscillatory partial rotation
about its axis, said handpiece comprising a handle
(12) incorporating a drive shaft (20), a head (14)
incorporating a tool holder (30) mounted for rotation
about an axis (Y) perpendicular to the axis (X) of
the drive shaft, and a drive pin (26) extending from
the drive shaft, at a location laterally offset from
the shaft axis, into an axially extending slot (40)
in the tool holder so as to drive the latter in oscillatory
partial rotation upon rotation of the drive shaft,
characterised in that the face of the tool holder
in which the said slot (40) is defined is convex in
the direction of the length of the slot.

2.    A dental handpiece as claimed in claim 1, wherein
the convexity of the said slot (40) is such that the
said drive pin extends into the slot to substantially
the same extent at all positions of rotation of the
drive shaft.

3.    A dental handpiece as claimed in claim 1 or
2, wherein the said face (32) of the tool holder in
which the said slot (40) is defined is part-spherical
with its geometric centre on the axis (Y) of the tool
holder at the point where that axis and the axis (X)
of the drive shaft intersect.

4.    A dental handpiece as claimed in claim 3, wherein
the said drive pin (26) is located adjacent the perimeter
of a circular end face (24) of the drive shaft face,
said end face being of concave part-spherical shape
concentric with, and closely adjacent, the said part-
spherical face (32) of the tool holder.

5.    A dental handpiece as claimed in claim 4, wherein the said drive pin (26) is circular cylindrical and has its axis passing through the intersection (0) of the drive shaft and tool holder axes.

6.    A dental handpiece as claimed in any preceding claim, wherein the floor (41) of the said slot (40) is outwardly concave.

7.    A dental handpiece as claimed in any of the preceding claims, wherein the means for securing a dental tool in the said tool holder comprises a pair of slots (50, 52) in the said head (14), a pair of bores (54, 56) in the head, one such bore (56) forming an extension of a tool-receiving bore (38) in the tool holder and the other being screw-threaded (55), a locking plate (60) slidably mounted in said slots (50, 52) and formed with a pair of openings (62, 64) alignable with said bores (54, 56), a screw (58) engageable in said threaded bore (55) to secure the locking plate in position, the dental tool being held against withdrawal by a terminal screw (66) thereof received in the unthreaded bore (56) and having its head engaging said locking plate.

0064871

FIG. 1

FIG. 2

FIG. 3